(19) Europäisches Patentamt
European Patent Office
Office européen des brevets

(11) **EP 3 176 752 A1**

(12) **EUROPEAN PATENT APPLICATION**
published in accordance with Art. 153(4) EPC

(43) Date of publication:
**07.06.2017 Bulletin 2017/23**

(51) Int Cl.:
*G06T 7/20* (2017.01)      *G06T 7/00* (2017.01)
*G08G 1/16* (2006.01)      *H04N 5/232* (2006.01)
*H04N 7/18* (2006.01)      *H04N 19/513* (2014.01)

(21) Application number: **15828062.8**

(22) Date of filing: **03.06.2015**

(86) International application number:
**PCT/JP2015/066038**

(87) International publication number:
**WO 2016/017272 (04.02.2016 Gazette 2016/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **28.07.2014 JP 2014152669**

(71) Applicant: **Clarion Co., Ltd.
Saitama-shi, Saitama 330-0081 (JP)**

(72) Inventors:
• **NAKAMURA, Katsuyuki
Tokyo 100-8280 (JP)**
• **AKIYAMA, Yasuhiro
Tokyo 100-8280 (JP)**
• **IRIE, Kota
Saitama-shi
Saitama 330-0081 (JP)**
• **UCHIDA, Yoshitaka
Saitama-shi
Saitama 330-0081 (JP)**
• **KATOU, Kenji
Saitama-shi
Saitama 330-0081 (JP)**

(74) Representative: **Moore, Graeme Patrick et al
Mewburn Ellis LLP
City Tower
40 Basinghall Street
London EC2V 5DE (GB)**

(54) **OBJECT DETECTING DEVICE**

(57)      An object detection apparatus receives an input of a compressed image stream, extracts, from a block included in the input compressed image stream, predetermined compression encoded information representing a feature of a compressed image, and determines, based on the extracted predetermined compression encoded information, whether or not the block is a candidate block including at least a part of the specific object. The object detection apparatus identifies, in a decoded image decoded from the compressed image stream, a candidate region of a predetermined size including the candidate block, calculates a predetermined feature amount from image data of the candidate region, and determines, based on the calculated predetermined feature amount, whether or not the candidate region includes at least a part of the specific object.

Fig. 1

**Description**

CLAIM OF PRIORITY

The present application claims priority from Japanese patent application JP 2014-152669 filed on July 28, 2014 the content of which is hereby incorporated by reference into this application.

BACKGROUND

This invention relates to an object detection apparatus.

In order to reduce casualties in traffic accidents, a preventive security system for preventing the accidents has been developed, and is practically used. The preventive security system is a system configured to be activated under a state in which a traffic accident is highly likely to occur. The preventive safety system is configured, for example, to detect moving objects (e.g., vehicles (four-wheeled vehicles), pedestrians, and two-wheeled vehicles) in an image picked up by a camera installed on an own vehicle, and to warn a driver when the own vehicle becomes likely to collide with the moving object.

As the background art in this technical field, there is a technology disclosed in JP 2001-250118 A. JP 2001-250118 A includes the following description: "a variable-length decoding module 1 is configured to partially decode compression encoded data of an input motion image. A detection subject setting module 2 is configured to input encoding mode information p from the variable length decoding module 1, and motion prediction position information q on a region from a region motion prediction module 4, and to output detection subject block position information r. A traveling region detection processing module 3 is configured to detect, based on the encoding mode information p of the current frame, prediction error information a, and motion prediction information b, whether or not a detection processing subject block set by the detection subjection setting module 2 belongs to a traveling region. This detection result is temporarily accumulated in a detection result memory 5, and is transmitted to the region motion prediction module 4. The region motion prediction module 4 is configured to predict a motion of the entire traveling region, and to output motion prediction position information q of the region." (refer to Abstract).

The preventive security system installed on the vehicle and the like needs to carry out highly reliable moving object detection, and is thus configured to use images picked up by a high resolution, high frame rate, and stereoscopic camera. However, the image picked up by such a camera has a significantly large data amount, and thus it is difficult to transmit the image without compression in the preventive safety system. Therefore, the preventive safety system needs to detect a moving object from a compressed image.

A technology disclosed in JP 2001-250118 A focuses on a motion vector and the like in the compressed image stream, to thereby quickly detect a block including a moving object from the compressed image stream. However, it is difficult to determine whether or not the moving object appearing in the detected block is likely to collide with the own vehicle only based on information of the compressed image stream.

SUMMARY OF THE INVENTION

This invention has been made in view of the above-mentioned problem, and therefore has an object to provide an object detection apparatus, which is configured to use a compressed image stream to detect a moving object quickly and highly precisely.

The present invention has, for example, the following configuration to solve above-mentioned problem. An object detection apparatus, which is configured to receive an input of a compressed image stream, being image data acquired by being compression-encoded in units of a block in a bit stream format, and to detect a specific object from a decoded image of the input compressed image stream, the object detection apparatus comprising: a stream analysis module, which is configured to extract, from a block included in the input compressed image stream, predetermined compression encoded information representing a feature of a compressed image; an object candidate detection module, which is configured to determine, based on the extracted predetermined compression encoded information, whether or not the block is a candidate block including at least a part of the specific object; and an object detection module, which is configured to identify, in a decoded image decoded from the compressed image stream, a candidate region of a predetermined size including the candidate block, to calculate a predetermined feature amount from image data of the candidate region, and to determine, based on the calculated predetermined feature amount, whether or not the candidate region includes at least a part of the specific object. According to the one aspect of this invention, the moving object can be detected quickly and highly precisely from the compressed image stream.

BRIEF DESCRIPTIONS OF DRAWINGS

The present invention can be appreciated by the description which follows in conjunction with the following figures, wherein:

FIG. 1 is a block diagram for illustrating a configuration example of an object detection apparatus according to a first embodiment;

FIG. 2 is a flowchart for illustrating an example of an object candidate block detection processing according to the first embodiment;

FIG. 3A is a diagram for illustrating an example of a decoded image generated from a compressed image stream according to the first embodiment;

FIG. 3B is a diagram for illustrating an object candidate information in each block of a decoded image generated from a compressed image stream according to the first embodiment;

FIG. 4 is a flowchart for illustrating an example of an object detection processing according to the first embodiment;

FIG. 5 is a diagram for illustrating a configuration example of a vehicle system according to a second embodiment;

FIG. 6 is a flowchart for illustrating an example of a compressed feature vector generation processing according to the second embodiment;

FIG. 7 is a diagram for illustrating an example of image pickup ranges of cameras installed on a vehicle system according to a third embodiment;

FIG. 8 is a diagram for illustrating a configuration example of a vehicle system according to the third embodiment.

DETAILED DESCRIPTION OF THE EMBODIMENTS

Embodiments of this invention are described below with reference to the accompanying drawings. However, it should be noted that the embodiments described below are merely examples for realizing this invention and do not limit a technical scope of this invention. Components common across the respective drawings are denoted by the same reference symbols. In the following, unless otherwise stated, in the embodiments, an object refers to a specific object that can travel and be detected by object detection apparatus of the embodiments (e.g., a vehicle (four-wheeled vehicle), a pedestrian, and a two-wheeled vehicle).

[First Embodiment]

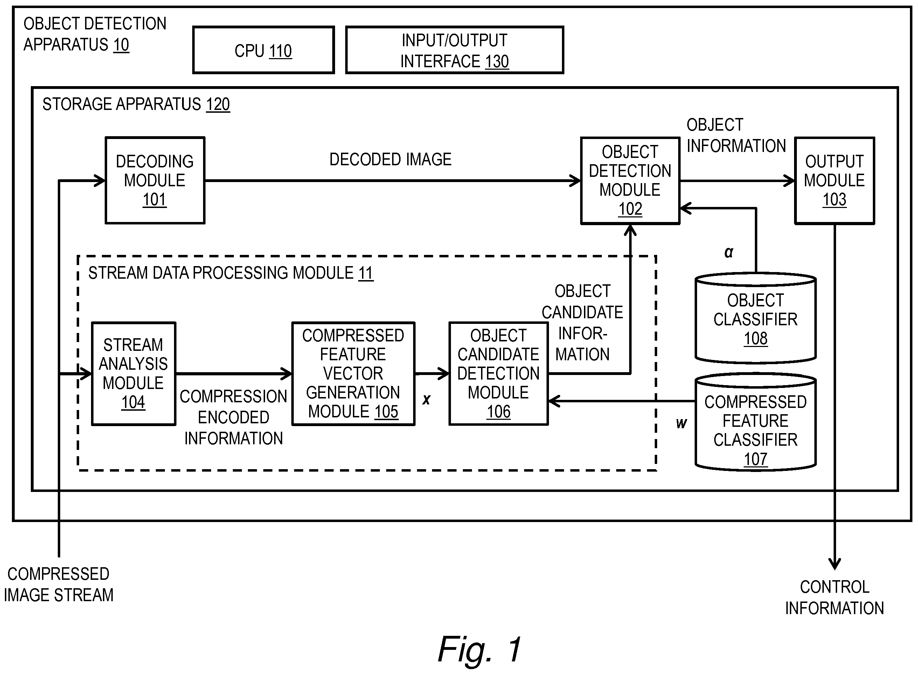

FIG. 1 is a diagram for illustrating a configuration example of an object detection apparatus 10 according to a first embodiment of this invention. The object detection apparatus 10 is constructed, for example, on a computer including a CPU 110, a storage apparatus 120, and an input/output interface 130. The CPU 110 includes a processor and/or a logic circuit configured to operate in accordance with programs, carry out input/output and read/write of data, and further execute respective programs described later.

The storage apparatus 120 is configured to temporarily load and store the programs to be executed by the CPU 110 and the data, and further hold the respective programs and the respective pieces of data. The storage apparatus 120 includes a decoding module 101, an object detection module 102, an output module 103, a stream data processing module 11, a compressed feature classifier 107, and an object classifier 108. The input/output interface 130 is an interface configured to receive an input of data and the like from an external apparatus, and output data and the like to the external apparatus.

Respective modules held by the storage apparatus 120 are programs. The program is executed by the CPU 110 to carry out specified processing while using the storage apparatus 120 and the input/output interface 130. A description where the program is a subject word may be a description where the CPU 110 is a subject word in this embodiment and other embodiments. Alternatively, processing to be carried out by the program is processing to be carried out by a computer or a computer system on which the program is running.

The CPU 110 is configured to operate in accordance with a program, thereby operating as a functional module for realizing a predetermined function. For example, the CPU 110 operates in accordance with a stream analysis module 104, thereby functioning as a stream analysis module, and operates in accordance with a compressed feature vector generation module 105, thereby functioning as a compressed feature vector generation module. The same holds true for the other programs. Further, the CPU 110 also operates as a functional module for realizing a plurality of respective pieces of processing to be carried out by respective programs. The computer and the computer system are an apparatus and a system including those functional modules.

The stream data processing module 11 includes the stream analysis module 104, the compressed feature vector generation module 105, and an object candidate detection module 106. The stream data processing module 11 is configured to receive an input of a compressed image stream, and detect and output object candidate information from information acquired by partially decoding the input compressed image stream.

The compressed image stream is compression encoded image data in the bit stream form. The format of the compressed image stream input to the object detection apparatus 10 may be an existing image encoding standard, e.g., JPEG, MPEG-2, H.264/AVC, and H.265/HEVC, and other standards including original standards.

The stream analysis module 104 is configured to carry out partial decoding on the compressed image stream to extract compression encoded information for each block, which is a unit of encoding constructed by at least one pixel neighboring each other. The compression encoded information is information encoded in a process of generating the compressed image stream, and represents feature amounts of a compressed image. The compression encoded information is information acquired by encoding information reflecting features (e.g., temporal correlation between images, and spatial correlation in an image) of the compressed image data acquired by reducing redundancy of the image data. The stream analysis module 104 is configured to output the extracted compression encoded information to the compressed feature vector generation module 105.

The compressed feature vector generation module 105 is configured to generate, from the compression encoded information, a compressed feature vector having an arbitrary dimension for each block. The compressed feature vector generation module 105 outputs the generated compressed feature vector to the object candidate detection module 106.

The decoding module 101 is configured to receive the input of the compressed image stream, use, for example, a known decoding method to generate a decoded image of the compressed image stream, and output the decoded image. The object candidate detection module 106 is configured to determine, based on the compressed feature vector output by the compressed feature vector generation module 105, whether or not each block is a candidate of a block including a part or an entirety of an object. The candidate is hereinafter referred to as object candidate block. The object candidate detection module 106 is configured to output object candidate information including a result of the determination for each block to the object detection module 102.

The compressed feature classifier 107 is a classifier configured to determine whether or not the block is an object candidate block based on the compressed feature vector in a block, and includes information, e.g., a weighing coefficient vector, to be applied to the classifier. A description is later given of the compressed feature vector. The storage apparatus 120 may be configured to hold a plurality of compressed feature classifiers 107. In this case, the object candidate detection module 106 may be configured to use different compressed feature classifiers 107 for each specific type (e.g., the vehicle, the pedestrian, and the two-wheeled vehicle) of the object to carry out the object candidate detection.

The object detection module 102 is configured to input the decoded image output by the decoding module 101 and the object candidate information output by the stream data processing module 11, detect objects in the decoded image, and output object information. The output module 103 is configured to input the object information output by the object detection module 102, determine a risk of collision, and output control information.

The object classifier 108 is a classifier configured to determine whether or not a region is an object based on a feature amount calculated from the decoded image, and includes information, e.g., a weighing coefficient vector to be applied to the classifier. The storage apparatus 120 may be configured to hold a plurality of object classifiers 108. In this case, the object detection module 102 may be configured to use different object classifiers 108 for each specific type of the object to carry out the object detection.

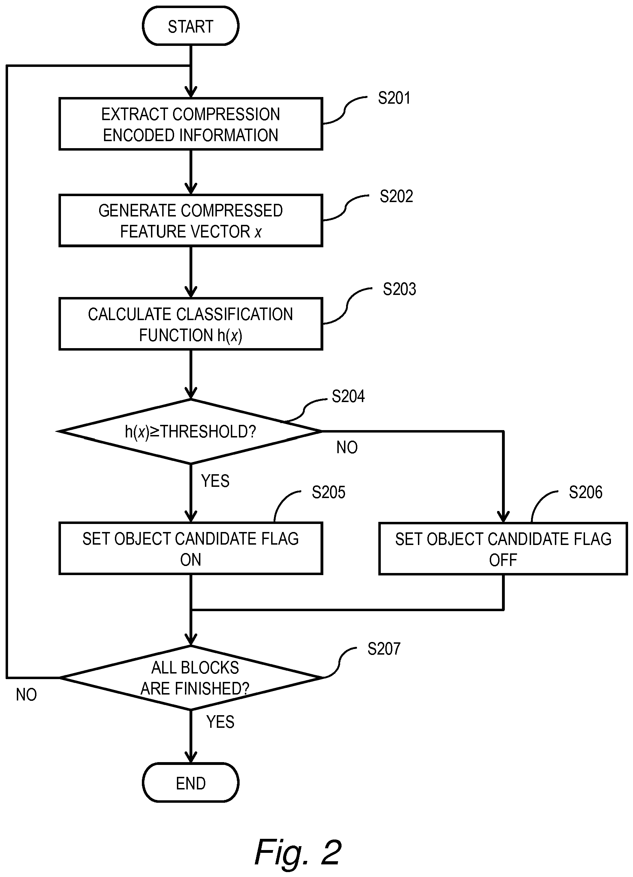

FIG. 2 is a flowchart for illustrating an example of the object candidate block detection processing by the stream data processing module 11. The stream analysis module 104 carries out partial decoding on the input compressed image stream in units of blocks, and extracts the compression encoded information effective for the object candidate detection (S201). The stream analysis module 104 may be configured to extract only compression encoded information required to generate a compressed feature vector corresponding to the compressed feature classifier 107 to be used by the object candidate detection module 106 out of pieces of compression encoded information effective for the object candidate detection.

The compression encoded information effective for the object candidate detection is compression encoded information representing a vector having at least one dimension reflecting a feature of the object, e.g., prediction mode information, a motion vector, a frequency conversion coefficient, a predictive residue, a quantization coefficient, and a brightness prediction coefficient. Moreover, a value reflecting a feature of an object is referred to as feature amount of the object. Thus, each component of the vector representing the effective compression encoded information is an example of the feature amount of the object. Unless otherwise stated, the feature amount of an object is hereinafter simply referred to as feature amount. The stream analysis module 104 outputs the extracted compression encoded information to the compressed feature vector generation module 105.

The compressed feature vector generation module 105 generates, from the input effective compression encoded information, a compressed feature vector $x=[x_1, x_2, ..., x_N]^T$ having $N$ dimensions corresponding to the compressed feature classifier 107 to be used by the object candidate detection module 106 (S202). $x_i$ ($i$ is an integer equal to or more than 1 and equal to or less than $N$) is an $i$-th feature amount in a block, and T represents the transpose.

A description is now given of an example in which the compressed feature vector generation module 105 generates the compressed feature vector of N dimensions. For example, the compressed feature vector generation module 105 is configured to generate a vector having N+ 1 dimensions or more including a part or an entirety of the input feature amounts as the components, and compress the dimension of the vector, thereby generating the compressed feature vector of the N dimensions. The compressed feature vector generation module 105 can compress the dimension of the vector by the principal component analysis (PCA), the linear discriminant analysis (LDA), and the like.

Moreover, the compressed feature vector generation module 105 may be configured to apply, for example, the K-means clustering having an input of N dimensions to the input compression encoded information, or carry out feature selection of selecting $N$ feature amounts out of the input feature amounts, thereby generating the compressed feature vector. Moreover, the compressed feature vector generation module 105 may be configured to generate a vector having $N$-1 dimensions or less including a part or an entirety of the input feature amounts, and add values calculated from the input feature amounts to the components of the vector, thereby generating the compressed feature vector having $N$ dimensions.

For example, when the prediction mode of the block is intra prediction, the stream analysis module 104 cannot acquire a motion vector of the block. However, the compressed feature vector generation module 105 can use the above-mentioned method to generate the compressed feature vector having arbitrary dimensions, thereby detecting an object candidate from a compressed image stream simultaneously including various encoding modes, e.g., the intra prediction and inter prediction.

The compressed feature vector generation module 105 outputs the generated compressed feature vector $x$ to the object candidate detection module 106. Then, the object candidate detection module 106 applies the compressed feature classifier 107 to the input compressed feature vector $x$, thereby determining whether or not this block is an object feature block.

Specifically, the object candidate detection module 106 calculates a classification function h(x), which is an example of the compressed feature classifier 107, represented by Expression 1 (S203). The object candidate detection module 106 determines whether or not the block is an object candidate block depending on whether or not an output of the classification function h($x$) is equal to or more than a predetermined threshold (S204). For example, h($x$) takes a value of from 0 to 1, and the object candidate detection module 106 determines that the block is an object candidate block when h(x) is equal to or more than 0.5.

[Expression 1]

$$\mathrm{h}(\mathbf{x}) = g(\mathbf{w}^{T}\mathbf{x})$$

[Expression 2]

$$g(z) = \frac{1}{1+e^{-\mathbf{z}}}$$

In the expressions, $w=[w_1, w_2, ..., w_N]^T$ is a weighting coefficient vector held by the compressed feature classifier 107. A function g($z$) is a sigmoid function (example of the logistic function), and converts the input value to an object candidate probability of from 0 to 1.0. The function g($z$) may be another type, and the classification function h($x$) may be configured as liner regression by making such setting as g($z$)=$z$. In other words, Expression 1 may be $h(x)=w^T x$.

When the classification function h($x$) is equal to or more than the predetermined threshold (YES in Step S204), the object candidate detection module 106 sets an object candidate flag to this block (S205). When the classification function h($x$) is less than the predetermined threshold (NO in Step S204), the object candidate detection module 106 does not set the object candidate flag to this block (S206). The stream data processing module 11 repeats the above-mentioned processing until all the blocks are finished (S207).

The compressed feature vector generation module 105 can acquire the weighting coefficient vector $w$, for example, by the supervised learning with the compressed feature vectors of object candidates and non-object candidates being used as learning data. Specifically, the compressed feature vector generation module 105 calculates a value of Expression 3, that is, minimizes an error function E($w$) represented by Expression 4, thereby calculating $w$.

[Expression 3]

$$\arg\min_{\mathbf{w}} E(\mathbf{w})$$

[Expression 4]

$$E(\mathbf{w}) = \frac{1}{M} \sum_{m=1}^{M} \{h(\mathbf{x}_m) - y_m\}^2 + \frac{\lambda}{M} \|\mathbf{w}\|^2$$

In the expressions, $x_m$ is a compressed feature vector of $m$-th learning data, $y_m$ is a supervised label of the $m$-th learning data, $\lambda$ is a tradeoff parameter for regularization, and $M$ is the number of pieces of the learning data. Moreover, the norm of the regularization term of Expression 4 is the $L_2$ norm. The compressed feature vector generation module 105 can calculate $w$ that minimizes $E(w)$ by the steepest descent method represented by the stochastic gradient descent (SGD) or solving the normal equation.

The compressed feature vector generation module 105 stores the calculated w in the compressed feature classifier 107 for use in the calculation of the classification function $h(x)$. The compressed feature vector generation module 105 may be configured to minimize a function acquired by omitting the regularization term from the error function represented by Expression 4, thereby calculating $w$.

Moreover, the norm of the regularization term of Expression 4 is not limited to the $L_2$ norm, but may be an $L_p$ norm ($p$ is a real number equal to or more than 0), e.g., the L1 norm and the Lo norm. The order of the norm of the regularization term of Expression 4 is determined in correspondence to $p$. For example, when the norm of the regularization term of Expression 4 is the $L_1$ norm, the order of the norm is 1. The object candidate detection module 106 can use the weighting coefficient vector $w$ calculated by the above-mentioned method to carry out the object candidate detection, thereby increasing a precision of the object candidate detection.

The compressed feature vector generation module 105 may be configured to calculate the weighting coefficient vector by other methods. Moreover, the compressed feature vector generation module 105 may not calculate the weighting coefficient vector, and a predetermined weighting coefficient vector may be stored in the compressed feature classifier 107.

Moreover, the object candidate detection module 106 may use, in place of the determination processing by the classification function $h(x)$ in Step S203 to Step S206, the compressed feature classifier 107 based on the Naive Bayes method to determine whether or not each block is an object candidate block. On this occasion, when the compressed feature vector x is given for a block, the object candidate detection module 106 determines whether or not this block is an object candidate block by Expression 5 or Expression 6.

[Expression 5]

$$p(y \mid \mathbf{x}) = p(y) \prod_{k=1}^{K} p(\mathbf{x}_k \mid y)$$

[Expression 6]

$$y^* = \arg \max_{y} \left( \log(p(y)) + \sum_{k=1}^{K} \log(p(\mathbf{x}_k \mid y)) \right)$$

$y$ is an object candidate label (0: non-object candidate, 1: object candidate), $y^*$ is a determination result of the object candidate, $p(y|x)$ is a posterior probability of the object candidate label $y$ when the compressed feature vector $x$ is given, $p(y)$ is a prior probability of the object candidate label $y$, $p(xk|y)$ is a likelihood of a divided compressed feature vector $x_k$ ($k$ is an integer equal to or more than 1 and equal to or less than $K$) for the object candidate label $y$, and $K$ is the number of the divided compressed feature vectors.

The divided compressed feature vector $x_k$ is generated by dividing the compressed feature vector x for the respective types of the compression encoded information. Specifically, for example, when the compressed feature vector x is a vector constructed by motion vectors, the frequency conversion coefficients, and predictive residues, the object detection module 102 can generate three divided compressed feature vectors $x_1$ to $x_3$ from the compressed feature vector x. In other words, the object detection module 102 can form, from components of the compressed feature vector x, the vector $x_1$ constructed by components representing the motion vectors, the vector $x_2$ constructed by components

representing the frequency conversion coefficients, and the vector $x_3$ constructed by components representing the predictive residues.

Moreover, in Step S202, the compressed feature vector generation module 105 may be, for example, configured to generate divided compressed feature vectors respectively from the input effective pieces of compression encoded information, and output the generated divided compressed feature vectors to the object candidate detection module 106.

The object candidate detection module 106 is configured to acquire respective likelihoods p($xk|y$) for the $K$ divided compressed feature vectors, and acquire the posterior probability $p(y|x)$ acquired by unifying the plurality of pieces of compression encoded information by Expression 5. Only when the calculated posterior probability $p(y|x)$ is equal to or more than the predetermined threshold, the object candidate detection module 106 sets the object candidate flag to a block.

Moreover, the object candidate detection module 106 may be configured to use Expression 6 to calculate the determination result $y^*$, thereby determining whether or not this block is an object candidate block. The object candidate detection module 106 is configured to set the object candidate flag to a block only when the calculated determination result $y^*$ is 1.

The object detection apparatus 10 can use the compressed feature classifier 107 based on the Naive Bayes method to determine whether or not a block is an object candidate block even when the components of the compressed feature vector $x$ are partially lacking. For example, when the prediction mode of this block is the intra prediction, the stream analysis module 104 cannot acquire a motion vector of the block.

On this occasion, the object detection apparatus 10 needs to set the likelihood $p(y_k|y)$ for the motion vector to an appropriate value (e.g., 0.5), and then use the compressed feature classifier 107 based on the Naive Bayes method to make the determination for the object candidate block. The object detection apparatus 10 can highly precisely determine whether an object candidate is present or absent from the likelihood for the motion vector and other divided compressed feature vectors. The object candidate detection module 106 may be configured to use a graphical model, e.g., the Bayesian network, to calculate $p(y|x)$.

When the storage apparatus 120 holds the plurality of compressed feature classifiers 107, the object candidate detection module 106 may be configured to use, for example, the respective compressed feature classifiers 107 to carry out the processing in Step S203 to Step S207. On this occasion, in Step S205, the object candidate detection module 106 may be configured to set different object candidate flags for the respective compressed feature classifiers 107. Specifically, the object candidate detection module 106 may be configured to, for example, set a candidate flag representing the vehicle when the compressed feature classifier 107 configured to identify the vehicle is used, and set a candidate flag representing the pedestrian when the compressed feature classifier 107 configured to identify the pedestrian is used.

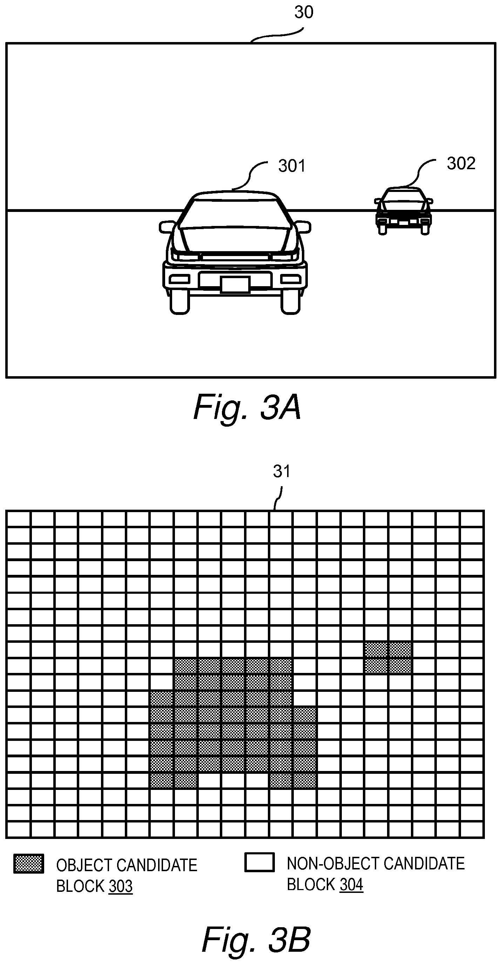

FIG. 3A is a diagram for illustrating an example of the decoded image generated from the compressed image stream. In the decoded image 30, a vehicle 301 and a vehicle 302 are imaged.

FIG. 3B is a diagram for illustrating the object candidate information in each block of the decoded image generated from the compressed image stream. As described above, the stream data processing module 11 is configured to generate the compressed feature vector for each of the blocks of the image, and determine whether or not each of the blocks is an object candidate block. An object candidate block 303 is a block that is determined to include an object candidate by the stream data processing module 11, namely, a block to which the object candidate flag is set. A non-object candidate block 304 is a block that is determined not to include an object candidate by the stream data processing module 11, namely, a block to which the object candidate flag is not set.

In the candidate block including the vehicle 301 or the vehicle 302, namely, in the object candidate block, for example, the compression encoded information having a characteristic nature as described below is observed. For example, the norm (absolute value) of the motion vector increases as a result of the travel of the object, and the object candidate detection module 106 can determine that a block having a large norm of the motion vector compared with learned non-object candidate blocks is highly probably an object candidate (vehicle) block.

Moreover, compared with a road surface and the sky, the vehicle has a complex texture, and a sum of high frequency components more than a predetermined frequency out of the frequency conversion coefficients is large in blocks constructing the vehicle. Therefore, the object candidate detection module 106 can determine that the block large in the sum of the high frequency components compared with the frequency conversion components of the learned non-object candidate blocks is highly possibly an object candidate block.

In addition, blocks constructing the vehicle move together, and the motion vectors in those blocks are thus high in the correlation with the motion vectors of spatially adjacent blocks. Therefore, the object candidate detection module 106 may be configured to make, for a block having the same motion vector as that of adjacent blocks, the same determination (whether or not the block is an object candidate block) as that for the adjacent blocks. Further, when the vehicle includes a plurality of object candidate blocks, an inner block (e.g., a block corresponding to a hood or a block corresponding to a door portion of the vehicle) of those blocks has a plane texture, and tends to be visually affected by quantization compared with a complex texture. Specifically, a distortion that is easy to visually recognize is generated by quantizing the high frequency components. In order to reduce the influence of this quantization error, a quantization coefficient is reduced. Thus, the object candidate detection module 106 can determine a block high in the quantization coefficient compared with the learned non-object candidate blocks to be highly possibly an object candidate block.

Moreover, when the vehicle travels in a depth direction, an affine deformation of a texture is generated, and thus it is hard to use a general encoding technology to generate a predicted image, resulting in an increase in prediction residue. Therefore, the object candidate detection module 106 can determine that a block large in the prediction residue compared with the learned non-object candidate blocks is highly possibly an object candidate block.

Moreover, the inter prediction becomes difficult because the affine deformation is generated about a contour portion of the object, and thus an encoding cost increases. As a result, the intra prediction mode frequently occurs. Therefore, when blocks around are in the inter prediction mode, but a subject block is in the intra prediction mode, the object candidate detection module 106 can determine that the subject block is highly possibly an object candidate block.

Moreover, an appearance of an object causes gain control of the camera for image pickup to be activated, and consequently, changes in brightness prediction coefficients (e.g., a weighting coefficient and an offset coefficient) between frames are generated. Thus, the object candidate detection module 106 can determine that a frame large in the weighting coefficient and the offset coefficient in a brightness signal or a color difference signal highly possibly includes an object candidate block.

All of the above-mentioned pieces of the compression encoded information are examples of the compression encoded information effective for the object detection. Thus, when the compressed feature classifier 107 to which an appropriate weighting coefficient vector and the like are applied is prepared, the object detection apparatus 10 can highly precisely detect an object candidate from the information acquired by partially decoding the compressed image stream. In other words, the object candidate detection module 106 can calculate a probability that each block is an object candidate block by assigning the compressed feature vector x generated from the compression encoded information having the above-mentioned feature to Expression 1.

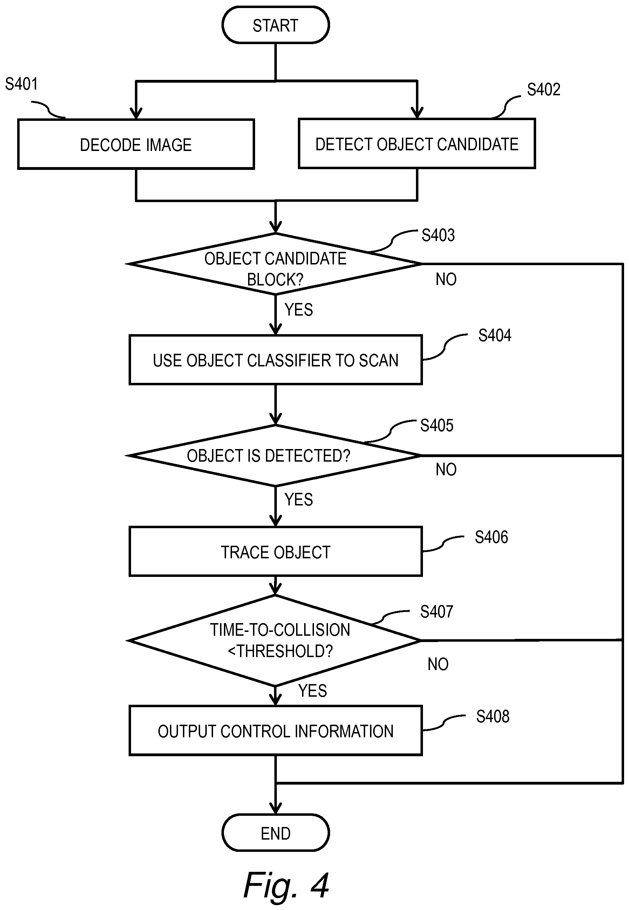

FIG. 4 is a flowchart for illustrating an example of the object detection processing by the object detection apparatus 10. First, the decoding module 101 uses, for example, a known decoding method to generate the decoded image from the compressed image stream, and outputs the generated decoded image to the object detection module 102 (S401). When an image encoded, for example, by a general motion image encoding standard is decoded, the decoding module 101 decodes the image in the following way. The decoding module 101 applies variable-length decoding to the compressed image stream, inversely quantizes a variable-length decoded prediction error signal, and inversely frequency-transforms the inversely quantized prediction error signal. The decoding module 101 further adds the inversely frequency-transformed prediction error signal and the predicted image signal generated by the intra prediction and the inter prediction to each other, thereby generating the decoded image.

The decoding module 101 can use, for example, the inverse discrete cosine transform (IDCT) to carry out the inverse frequency transform. Moreover, the decoding module 101 may use the inverse discrete Fourier transform (IDFT) or the inverse discrete sine transform (IDST) to carry out the inverse frequency transform.

Typically, the generation of the decoded image takes time, and thus, in parallel with the image decoding by the decoding module 101, the stream data processing module 11 carries out the processing in Step S201 to S207. In other words, the stream data processing module 11 detects object candidates, and outputs the object candidate information to the object detection module 102 (S402). The object detection apparatus 10 may not carry out the processing in Step S401 and the processing in Step S402 in parallel, but a period until processing in Step S403 starts can be reduced by carrying out those pieces of processing in parallel.

When the processing in Step S401 and Step S402 is finished, the object detection module 102 determines whether or not the object candidate flag is set to each block in the input object candidate information (S403). For a block to which the object candidate flag is set (YES in Step S403), the object detection module 102 calculates the feature amount corresponding to the object classifier 108 to be used from the decoded image, and uses the object classifier 108 to which the calculated feature amount is assigned to scan a neighborhood region of this block (S404).

Specifically, the object detection module 102 uses, for example, the object classifiers 108 respectively having a predetermined plurality of scales to scan a rectangular region of a predetermined size (e.g., 100×100 pixels) having an upper left corner at a position shifted upward and leftward from the object candidate block by one block. The rectangular region is referred to as object candidate region. The numbers of vertical and horizontal pixels of each of the scales of the object classifiers 108 used for the scan are equal to or less than the numbers of vertical and horizontal pixels of the respective object candidate regions.

For example, the object detection module 102 can control the object classifier 108 small in the size, e.g., 10×10 pixels, to scan, thereby detecting an object that is far from the image pickup point of the image, and thus appears small. Moreover, the object detection module 102 can control the object classifier 108 large in the size, e.g., 100×100 pixels, to scan, thereby detecting an object near the image pickup point of the image, and thus appears large.

The object detection module 102 can use the object classifiers 108 having the plurality of scales to scan all over the object candidate region, thereby exhaustively searching objects close to and far from the image pickup point of the image. Moreover, the object detection module 102 can unify identification results by the object classifiers 108 having the plurality of scales, thereby detecting external forms of the objects included on the object candidate region. Further, the object detection module 102 may select the position of the upper left corner of the object candidate region depending on a possible travel speed of the subject object, e.g., a position shifted upward and leftward by three blocks from the object candidate block when the object classifier 108 for identifying the vehicle is used, and a position shifted upward and leftward by one block from the object candidate block when the object classifier 108 for identifying the pedestrian is used.

Moreover, the object detection module 102 may be configured not to change the scale of the object classifier 108, but form pyramidal images by scaling down the image itself, and use the object classifiers 108 of predetermined scales to scan the images of the respective scales. In both the case in which the object detection module 102 changes the scale of the object classifier 108, and the case in which the object detection module 102 changes the scale of the image, the same effect can be provided.

The object detection module 102 uses the object classifiers 108 having the plurality of scales to scan object candidate regions defined by the respective object candidate blocks, and thus a calculation amount required to detect an object from the object candidate region is more than a calculation amount required to detect the object candidate block. The object detection module 102 can carry out the object detection only in the object candidate region corresponding to the object candidate block extracted by the stream data processing module 11, thereby quickly carrying out the object detection compared with a case in which the entire decoded image is searched, that is, all the blocks are assumed to be object candidate blocks.

In Step S404, the object detection module 102 uses, for example, the object classifier 108 using a Haar-like feature represented by Expression 7 for the scan.

[Expression 7]

$$H(\mathbf{p}) = \text{sign}\left( \sum_{t=1}^{T} \alpha_t h_t(\mathbf{p}) \right)$$

H(p) is the object classifier 108, p is a feature vector constructed by the Haar-like features in a region to which the object classifier 108 is applied, $h_t(p)$ is a $t$-th weak classifier (t is an integer equal to or more than 1 and equal to or less than $T$), and $\alpha_t$ is a weighting coefficient of the $t$-th weak classifier $h_t(p)$. In other words, the object classifier 108 is expressed by weighted voting by the weak classifiers. sign() is a sign function, returns +1 when the value in parentheses is a positive value, and returns -1 when the value in the parentheses is a negative value. When H(p)=+1, the object detection module 102 determines that the region to which the object classifier 108 is applied is an object. When H(p)=-1, the object detection module 102 determines that the region to which the object classifier 108 is applied is not an object.

The weak classifier $h_t$ and the weighting coefficient $a_t$ are given, for example, by learning in advance, and are stored in the object classifier 108. The feature vector $p$ constructed by the Harr-like features is generated by the object detection module 102 from the decoded image. Moreover, the weak classifier $h_t(p)$ in parentheses on the right side of Expression 7 can be represented by Expression 8.

[Expression 8]

$$h_t(\mathbf{p}) = \begin{cases} +1 & \text{if } f_t(\mathbf{p}) > \theta_t \\ -1 & \text{otherwise} \end{cases}$$

In the expression, $f_t(p)$ is a $t$-th feature amount for the feature vector constructed by the Haar-like features, and $\theta_t$ is a $t$-th threshold. The feature amount $f_t(p)$ in the Haar-like features represents a difference in an average brightness between the regions.

The object detection module 102 may be configured to calculate other feature amounts from the decoded image, and use the object classifier 108 constructed by combining this feature amount and other learning methods with each other to detect an object. Moreover, the object detection module 102 may be configured to use the object classifier 108 constructed by combining the histograms of oriented gradients (HOG) feature and the support vector machine (SVM) learning for the object detection.

Moreover, the object detection module 102 may be configured to use the object classifier 108 constructed by combining a feature amount automatically calculated by the convolution neural network (CNN) learning and the logistic regression for the object detection. Moreover, the object detection module 102 may be configured to use the object classifier 108, which is based on a deep neural network constructed by piling a plurality of layers (e.g., three or more layers) of a CNN learner and a neural network classifier for the object detection.

The object detection module 102 can highly precisely carry out the object detection by using the feature amounts calculated from the decoded image to carry out the object detection. Specifically, the object detection module 102 can highly precisely determine, for example, whether the object candidate region is an object, e.g., a vehicle, that is likely to collide with the own vehicle, or a noise, e.g., a shadow, that is not likely to collide with the own vehicle.

The object detection module 102 determines whether or not an object is detected by the above-mentioned processing (S405). When an object is detected (YES in Step S405), the object detection module 102 uses a plurality of decoded images of the compressed image stream to trace the object in time series (S406). The object detection module 102 can use a known trace method, e.g., the Kalman filter and the particle filter, to trace the object. The object detection module 102 outputs the object information including a trace result of the object to the output module 103.

The output module 103 calculates, from the trace result included in the input object information, the distance between the own vehicle and the object and the speed and the acceleration of the object, and calculates a period until the own vehicle and the object collide with each other (S407). This time is hereinafter referred to as time-to-collision (TTC). The time-to-collision is an example of a value reflecting a risk of collision, and the risk of collision increases as the time-to-collision decreases.

When the output module 103 determines that the time-to-collision is less than a predetermined threshold (YES in Step S407), the output module 103 outputs control information for carrying out alarm control and brake control (S408). In Step S405, when the object is not detected (NO in Step S405), or in Step S407, the time-to-collision is equal to or more than the predetermined threshold (NO in step S407), the processing is finished. In Step S408, the output module 103 may change the control information to be output in a stepwise manner depending on the value of the time-to-collision. Moreover, in Step S407, the value calculated by the output module 103 only needs to be a value reflecting the risk of collision, and is not limited to the time-to-collision.

When the storage apparatus 120 holds the plurality of object classifiers 108, the object detection module 102 may use, for example, the respective object classifiers 108 to carry out the processing in Step S404 to Step S406. Moreover, in Step S205, when the object candidate detection module 106 sets different object candidate flags for the respective compressed feature classifiers 107, the object detection module 102 may use only the object classifier 108 corresponding to the object candidate flag to determine the object detection. Specifically, for example, when the object candidate detection module 106 sets the candidate flag representing the vehicle to a block, the object detection module needs to use only the object classifier 108 for classifying the vehicle for the determination of the object detection.

The object detection apparatus 10 in this embodiment can extract an object candidate block and scan only an object candidate region including this object candidate block in the decoded image for the object candidate detection, thereby reducing the calculation time compared with the method of searching the entire decoded image. In other words, the object detection apparatus 10 in this embodiment can quickly carry out the object detection. Moreover, the object detection apparatus 10 can extract the object candidate block based on the compression encoded information, thereby highly precisely detecting the object candidate block. Moreover, the object detection module 102 uses the feature amounts calculated from the decoded image, and can thus highly precisely carry out the object detection.

Moreover, the object detection apparatus 10 can partially decode the compressed image stream to detect the object candidate blocks in parallel with the generation of the decoded image, thereby reducing the period until the object detection module 102 starts the object detection processing, and objects can thus be detected more quickly. Moreover, the object detection apparatus 10 can use the compressed feature vector acquired by unifying the extracted pieces of compression encoded information to make the determination for the object candidate detection, thereby more precisely detecting the object candidate blocks. Moreover, the object detection apparatus 10 can adjust the dimensions of the compressed feature vector, thereby detecting object candidates even from the compressed image stream in which various encoding modes, e.g., the intra prediction and the inter prediction, simultaneously exist.

[Second Embodiment]

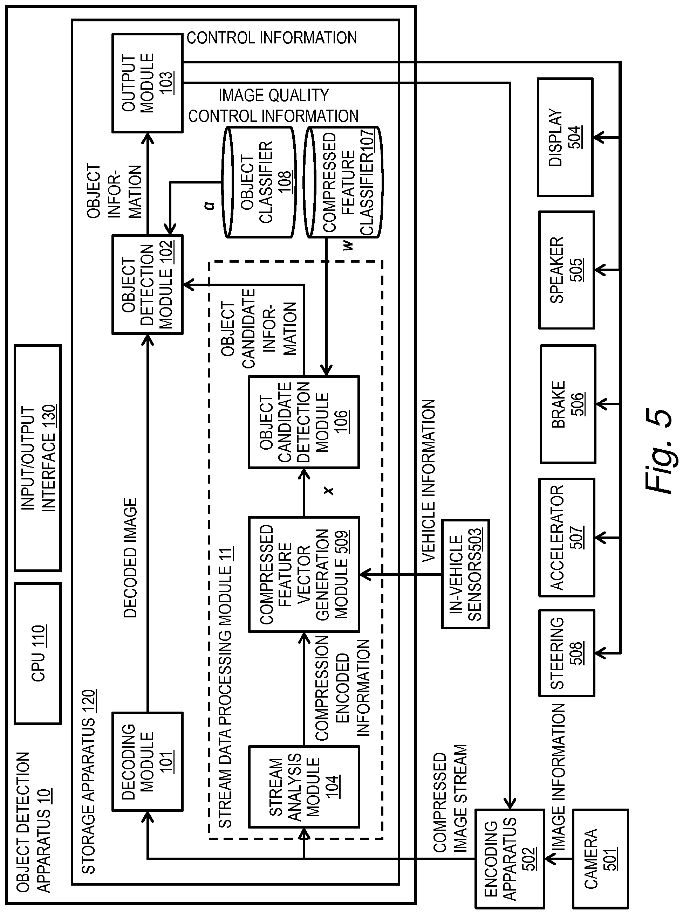

In a second embodiment of this invention, a description is given of a vehicle system including a vehicle on which the object detection apparatus 10 is installed. FIG. 5 is a diagram for illustrating a configuration example of the vehicle system of this embodiment. The vehicle system of this embodiment includes the object detection apparatus 10, a camera 501, an encoding apparatus 502, in-vehicle sensors 503, a display 504, a speaker 505, a brake 506, an accelerator 507, and a steering 508.

The camera 501 is installed on the vehicle, and is configured to pick up an image of a periphery of the vehicle. The encoding apparatus 502 is configured to generate the compressed image stream from the image picked up by the camera 501, and output the compressed image stream to the object detection apparatus 10.

The in-vehicle sensors 503 are configured to measure, for example, a wheel speed, a steering angle, and the like of the vehicle, and output the measured information to a compressed feature vector generation module 509. The display 504 is installed, for example, in a room of the vehicle, and is configured to display the decoded image and the like. The speaker 505 is installed, for example, in the room of the vehicle, and is configured to output an alarm sound and the like. The brake 506 is configured to decelerate the vehicle. The accelerator 507 is configured to accelerate the vehicle. The steering 508 is configured to steer the vehicle.

The configuration of the object detection apparatus 10 is the same as that of the first embodiment. However, there is a difference in that the compressed feature vector generation module 509 is configured to receive an input of vehicle information, e.g., the vehicle speed and the steering angle measured by the in-vehicle sensors 503, and use the input vehicle information to generate the compressed feature vector.

When the image picked up by the camera 501 installed on the vehicle traveling at high speed is used for the object detection, the object detection apparatus 10 can generate the compressed feature vector reflecting the own vehicle travel, namely, the travel of the camera 501, thereby carrying out more precise object candidate detection. Specifically, when a motion vector is included in the input compression encoded information, the compressed feature vector generation module 509 separates a motion vector generated by the own vehicle travel and a motion vector of the subject object from each other.

Thus, the compressed feature vector generation module 509 is configured to carry out dead reckoning, which is calculation of an own vehicle travel amount, by using the input vehicle speed and steering angle information. The compressed feature vector generation module 509 is configured to calculate the motion vector corresponding to the own vehicle travel from the result of the dead reckoning, and cancel the motion vector corresponding to the own vehicle travel in the motion vector extracted by the stream analysis module 104.

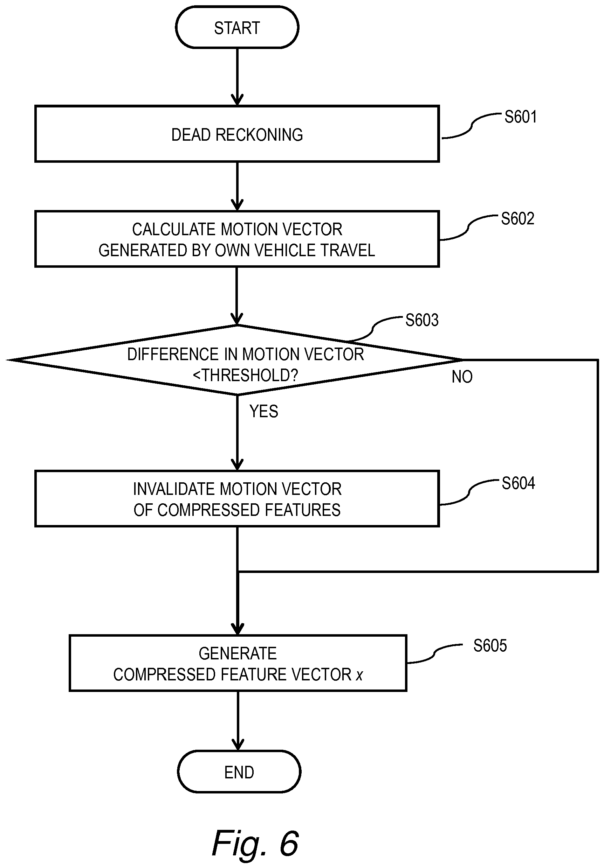

FIG. 6 is a flowchart for illustrating an example of the compressed feature vector generation processing of this embodiment. The compressed feature vector generation module 509 uses the vehicle speed and the steering angle and the like measured by the in-vehicle sensors 503 to carry out the dead reckoning, thereby calculating the own vehicle travel amount (position and attitude of the vehicle) (S601). Then, the compressed feature vector generation module 509 transforms the calculated own vehicle travel amount into motion vectors in the respective blocks in the image (S602).

The compressed feature vector generation module 509 determines whether or not the norm of the difference between the motion vector caused by the own vehicle travel and the motion vector included in compression encoded features is less than a predetermined threshold (S603). When the norm is less than the threshold (YES in Step S603), the motion vector in the compressed image stream is considered to be generated by the own vehicle travel, and the compressed feature vector generation module 105 invalidates the motion vector included in the compression encoded features (S604). Specifically, the compressed feature vector generation module 105 sets, for example, the motion vector included in the compression encoded features to a zero vector. As a result, the compressed feature vector generation module 105 can cancel the motion vector generated by the own vehicle travel.

Finally, the compressed feature vector generation module 105 generates the compressed feature vector x (S605). In Step S603, when the norm is equal to or more than the threshold (NO in Step S603), the compressed feature vector generation module 105 proceeds to Step S605. The object detection apparatus 10 carries out the processing in Step S605, and then, carries out the processing in Step S203 to Step S207 and Step S401 to Step S408.

When the motion vector is not included in the input compression encoded information, the compressed feature vector generation module 509 may not carry out the processing in Step S601 to Step S604. In other words, on this occasion, the compressed feature vector generation module 509 only needs to generate the compressed feature vector by the same method as that of the first embodiment.

In Step S408, the output module 103 calculates the risk of collision from the object information output by the object detection module 102, and outputs the control information depending on the risk of collision. When the risk of collision is low, the output module 103 outputs, for example, the control information for displaying a location of the risk on the display 504 and the control information for generating an alarm sound by the speaker 505. When the risk of collision is high, the output module 103 outputs, for example, the control information to the brake 506 and the steering 508, thereby directly controlling the motion of the vehicle. The output module 103 is configured to output the control information, thereby realizing a safe drive support system causing a less sense of discomfort felt by the driver.

Moreover, when the object detection module 102 detects an object, the output module 103 may be configured to output image quality control information to the encoding apparatus 502. For example, the output module 103 is configured to output, in order to improve the image quality in an object neighborhood region, the image control information for decreasing a quantization parameter (QP) in the neighborhood of this object, or increasing a target bit rate, or the like to the encoding apparatus 502. The object neighborhood region refers to, for example, a region including the object in the decoded image that is, for example, a region smallest in the area out of a rectangular region or an ellipsoidal region including the object.

Moreover, the output module 103 may be configured to output to the encoding apparatus 502 the image quality control information, for example, for applying the super resolution processing of increasing the resolution of the object neighborhood region, or for applying the I/P conversion of converting an interlace video signal to a progressive video signal when the camera is of the interlace type. This processing enables the vehicle system of this embodiment to carry out the image quality control of decreasing the compression ratio (increasing the image quality) of the object neighborhood region. Moreover, the output module 103 may be configured to output to the encoding apparatus 502 the image quality control information for increasing the compression ratio (decreasing the image quality) of a background region representing a region of the image excluding the object neighborhood region.

The vehicle system of this embodiment can determine the risk of collision between the own vehicle and an object, can generate an alarm and can carry out control at a timing when the risk is determined to be high, and can thus support the drive by the driver. Moreover, the vehicle system can use the in-vehicle sensor information to cancel the motion vector generated by the own vehicle travel, and can thus highly precisely carry out the object candidate detection.

Moreover, the vehicle system can appropriately control the compression ratio of the image encoding depending on the object detection result, and can thus realize more reliable object detection. In other words, image recognition unlikely to be affected by the noise can be realized by decreasing the compression ratio and increasing the image quality of the object neighborhood region. Further, even when the compression ratio of the object neighborhood region is decreased, the vehicle system can increase the compression ratio and decrease the image quality of the background region, thereby transmitting the compressed image stream without exceeding the bandwidth of an in-vehicle LAN.

[Third Embodiment]

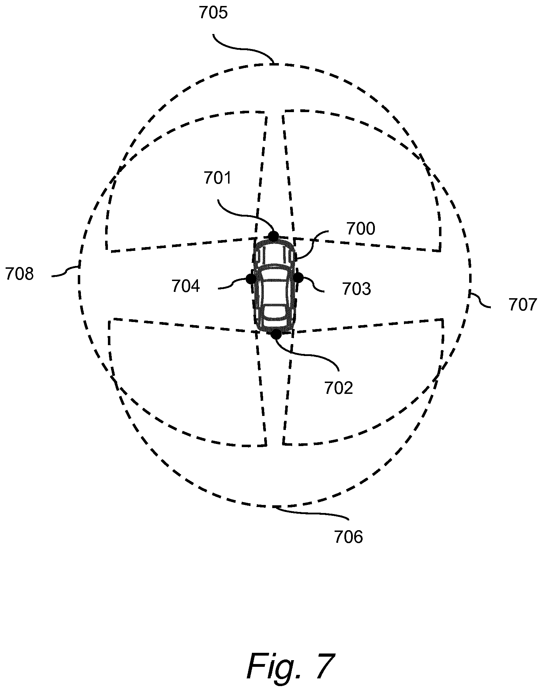

In a third embodiment of this invention, a description is given of a vehicle system including a vehicle on which the object detection apparatus 10 and a plurality of cameras are installed. FIG. 7 is a diagram for illustrating an example of image pickup ranges of the cameras installed on the vehicle system of this embodiment. Cameras 701, 702, 703, and 704 are installed on a front side, a rear side, a right side, and a left side of the own vehicle 700, respectively. When the cameras 701 to 704 are wide angle cameras having, for example, a view angle of approximately 180 degrees, an image of the entire range of the own vehicle can be picked up. The cameras 701 to 704 respectively pick up images of the image pickup ranges 705 to 708.

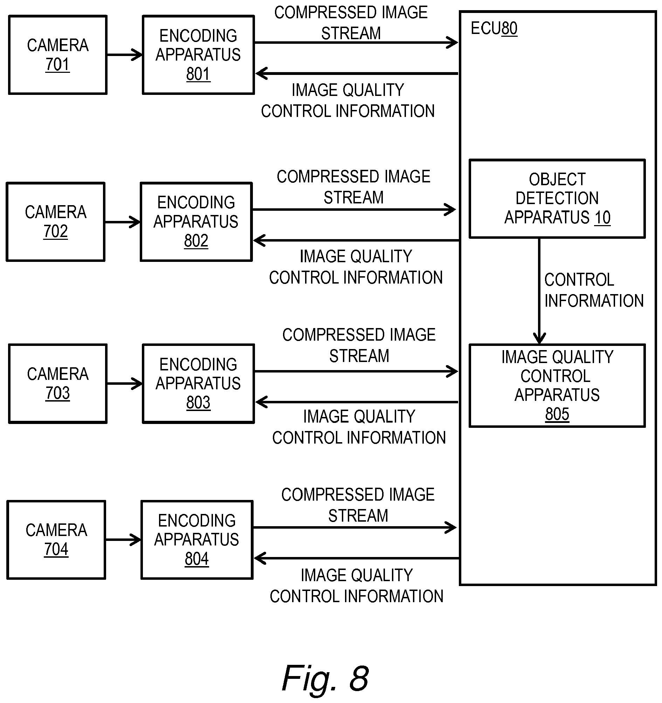

FIG. 8 is a diagram for illustrating a configuration example of the vehicle system of this embodiment. The vehicle system of this embodiment includes the four cameras 701 to 704, and encoding apparatus 801 to 804 respectively corresponding to the cameras 701 to 704, and an ECU 80. As long as the cameras 701 to 704 are arranged so as to pick up images of certain ranges around the vehicle, the arrangement is not particularly limited. In other words, as illustrated in FIG. 7, one of the cameras 701 to 704 may be arranged on each of the front side, the rear side, the left side, and the right side of the vehicle, or two of the cameras may be arranged on each of the front side and the rear side of the vehicle. Moreover, the number of the cameras is not limited as long as images of the certain ranges around the vehicle can be picked up, and the transmission of the compressed image streams does not exceed the bandwidth of the in-vehicle LAN.

The encoding apparatus 801 to 804 respectively generate the compressed image streams of the images picked up by the cameras 701 to 704, and output the compressed image streams to the ECU 80. The ECU 80 includes the object detection apparatus 10 and an image quality control apparatus 805. The configuration of the object detection apparatus 10 is the same as that of the first or second embodiment. The object detection apparatus 10 is configured to use the input compressed image streams to carry out the object detection, and output the control information to the image quality control apparatus 805. The control information includes, for example, object information (e.g., absence/presence of an object, the number of objects, and the coordinates of the objects) in the images picked up by the respective cameras 701 to 704.

The image quality control apparatus 805 is configured to output, based on the input object information, the image quality control information for integrally controlling the encoding apparatus 801 to 804. Specifically, the image quality control apparatus 805 outputs the image quality control information for increasing the compression ratio of the image picked up by the camera that does not have an object in the image pickup range, and decreasing the compression ratio of the image picked up by the camera having an object in the image pickup range.

In other words, the image quality control apparatus 805 outputs information for defining the target bitrates of the respective cameras 701 to 704 to the encoding apparatus 801 to 804 corresponding to the respective cameras 701 to 704. The image quality control apparatus 805 can use the above-mentioned processing to control the data amount of the compressed image streams input to the object detection apparatus 10. Moreover, the image quality control apparatus 805 may be configured to output to the encoding apparatus corresponding to this camera, for example, control information for stopping the output of the image picked up by the camera that has picked up an image in which there is no object in the image pickup range. The control information for stopping the output of the image is an example of the image quality control information.

The image quality control apparatus 805 may be configured to receive, for example, the in-vehicle sensor information and information on an operation state of the own vehicle, and output the image quality control information corresponding to those pieces of information. For example, the image quality control apparatus 805 is configured to determine a travel direction of the own vehicle based on the operation state information, e.g., the received steering angle and shift position. For example, regarding a camera that does not have an object in the image pickup range but picks up an image in the travel direction, the image quality control apparatus 805 may be configured not to output the image quality control information for increasing the compression ratio of the image or to output the image quality control information for decreasing the compression ratio of the image to an encoding apparatus corresponding to the camera.

In the vehicle system of this embodiment, through use of the plurality of cameras to pick up an image of the periphery of the own vehicle, the periphery of the own vehicle can be widely sensed, thereby detecting objects in a wide range. Moreover, in the vehicle system of this embodiment, even when a plurality of cameras are installed, through control of the image quality of the image of each of the cameras depending on the absence/presence of an object in the image pickup range of the camera, the plurality of camera images can be transmitted without exceeding the band width of the in-vehicle LAN, and an object can be detected more quickly and more precisely.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings shows control lines and information lines as considered necessary for explanations but do not show all control lines or information lines in the products. It can be considered that almost of all components are actually interconnected.

## Claims

1. An object detection apparatus, which is configured to receive an input of a compressed image stream, being image data acquired by being compression-encoded in units of a block in a bit stream format, and to detect a specific object from a decoded image of the input compressed image stream,
the object detection apparatus comprising:

   a stream analysis module, which is configured to extract, from a block included in the input compressed image stream, predetermined compression encoded information representing a feature of a compressed image;
   an object candidate detection module, which is configured to determine, based on the extracted predetermined compression encoded information, whether or not the block is a candidate block including at least a part of the specific object; and
   an object detection module, which is configured to identify, in a decoded image decoded from the compressed image stream, a candidate region of a predetermined size including the candidate block, to calculate a predetermined feature amount from image data of the candidate region, and to determine, based on the calculated predetermined feature amount, whether or not the candidate region includes at least a part of the specific object.

2. The object detection apparatus according to claim 1, wherein:

   the predetermined compression encoded information includes a sum of high frequency components out of frequency conversion coefficients; and
   the object candidate detection module is configured to determine whether or not the block is the candidate block based on a probability that the block is the candidate block, which is calculated from the sum of the high frequency components out of the frequency conversion coefficients of the block.

3. An object detection apparatus, which is configured to receive an input of a compressed image stream, being image data acquired by being compression-encoded in units of a block in a bit stream format, and to detect a specific object from a decoded image of the input compressed image stream, the object detection apparatus comprising:

   a stream analysis module, which is configured to extract, from a block included in the input compressed image stream, a predetermined plurality of types of compression encoded information representing features of a compressed image;

a compressed feature vector generation module, which is configured to unify the predetermined plurality of types of compression encoded information to generate a compressed feature vector having a predetermined dimensions in the block;

an object candidate detection module, which is configured to determine, based on the generated compressed feature vector, whether or not the block is a candidate block including at least a part of the specific object; and

an object detection module, which is configured to identify, in a decoded image decoded from the compressed image stream, a candidate region of a predetermined size including the candidate block, to calculate a predetermined feature amount from image data of the candidate region, and to determine, based on the calculated predetermined feature amount, whether or not the candidate region includes at least a part of the specific object.

4. The object detection apparatus according to claim 3, wherein the object candidate detection module is configured to:

divide the generated compressed feature vector into compressed feature vectors corresponding to the respective types of the compression encoded information; and

determine whether or not the block is the candidate block based on a product of likelihoods of the respective divided compressed feature vectors in the block with respect to an object candidate label representing whether or not the block is the candidate block.

5. The object detection apparatus according to claim 1, wherein the object candidate detection module is configured to:

assign the predetermined compression encoded information to a classifier to which a predetermined weight is applied; and

determine whether or not the block is the candidate block based on a value output from the classifier.

6. The object detection apparatus according to claim 5, wherein the predetermined weight comprises a value calculated by learning that uses the compression encoded information in a plurality of past blocks as learning data.

7. The object detection apparatus according to claim 1, wherein:

the object detection apparatus is installed on a vehicle;

the predetermined compression encoded information includes a motion vector extracted from the compressed image stream; and

the object candidate detection module is configured to determine whether or not the block is the candidate block based on a corrected motion vector acquired by removing from the motion vector an own vehicle travel component vector in the compressed image stream, which is calculated from speed information on the vehicle and steering angle information on the vehicle.

8. A vehicle system, comprising:

a vehicle on which the object detection apparatus of claim 1 is installed;

at least one image pickup apparatus, which is configured to pick up an image of a periphery of the vehicle; and

an encoding apparatus, which is configured to receive an input of images picked up by the at least one image pickup apparatus, generate a compressed image stream of the input images, and to output the generated compressed image stream to the object detection apparatus.

9. The vehicle system according to claim 8, wherein:

the object detection apparatus is configured to identify an object neighborhood region including the specific object from the images picked up by the at least one image pickup apparatus, and to output image quality control information for controlling an image quality of the object neighborhood region to the encoding apparatus; and

the encoding apparatus is configured to generate the compressed image stream of the input images based on the image quality control information.

10. The vehicle system according to claim 8, further comprising an image quality control apparatus, which is configured to output to the encoding apparatus image quality control information for controlling an image quality of the image picked up by each of the at least one image pickup apparatus based on whether or not the specific object is included in an image pickup range of each of the at least one image pickup apparatus,

wherein the encoding apparatus is configured to generate the compressed image stream of the input images based on the image quality control information.

11. The vehicle system according to claim 8, wherein the object detection apparatus is configured to track the specific object in a plurality of decoded images of the compressed image stream, calculate a risk of collision between the vehicle and the specific object based on a trace result of the specific object, and to output, when the risk of collision is equal to or more than a predetermined threshold, depending on the risk of collision, control information for controlling an operation of the vehicle to the vehicle.

12. A method of detecting a specific object from a decoded image of a compressed image stream, being image data acquired by being compression-encoded in units of a block in a bit stream format,
the method comprising:

extracting, from a block included in the compressed image stream, predetermined compression encoded information representing a feature of a compressed image;
determining, based on the extracted predetermined compression encoded information, whether or not the block is a candidate block including at least a part of the specific object; and
identifying, in an decoded image decoded from the compressed image stream, a candidate region of a predetermined size including the candidate block, calculating a predetermined feature amount from image data of the candidate region, and determining, based on the calculated predetermined feature amount, whether or not the candidate region includes at least a part of the specific object.

Fig. 1

Fig. 2

30

*Fig. 3A*

31

OBJECT CANDIDATE
BLOCK 303

NON-OBJECT CANDIDATE
BLOCK 304

*Fig. 3B*

```
                        ┌──────────┐
                        │  START   │
                        └────┬─────┘
              ┌──────────────┴──────────────┐
   S401       ▼                             ▼        S402
┌─────────────────────┐        ┌─────────────────────────┐
│    DECODE IMAGE     │        │  DETECT OBJECT CANDIDATE │
└──────────┬──────────┘        └────────────┬────────────┘
           └──────────────┬─────────────────┘
                          ▼                    S403
               ◇ OBJECT CANDIDATE ◇──── NO ──────────────┐
               ◇      BLOCK?      ◇                       │
                          │ YES                           │
                          ▼                   S404        │
               ┌──────────────────────────┐              │
               │ USE OBJECT CLASSIFIER TO  │              │
               │          SCAN             │              │
               └────────────┬─────────────┘              │
                            ▼               S405          │
               ◇ OBJECT IS DETECTED? ◇──── NO ───────────┤
                            │ YES                         │
                            ▼             S406            │
               ┌──────────────────────────┐              │
               │       TRACE OBJECT        │              │
               └────────────┬─────────────┘              │
                            ▼             S407            │
               ◇  TIME-TO-COLLISION  ◇──── NO ───────────┤
               ◇    <THRESHOLD?      ◇                    │
                            │ YES                         │
                            ▼            S408             │
               ┌──────────────────────────┐              │
               │ OUTPUT CONTROL INFORMATION│              │
               └────────────┬─────────────┘              │
                            └──────────────┬─────────────┘
                                           ▼
                                    ┌──────────┐
                                    │   END    │
                                    └──────────┘
```

*Fig. 4*

Fig. 5

START

DEAD RECKONING — S601

CALCULATE MOTION VECTOR
GENERATED BY OWN VEHICLE TRAVEL — S602

S603

DIFFERENCE IN MOTION VECTOR
<THRESHOLD?

NO

YES

INVALIDATE MOTION VECTOR
OF COMPRESSED FEATURES — S604

GENERATE
COMPRESSED FEATURE VECTOR *x* — S605

END

*Fig. 6*

Fig. 7

CAMERA
701

→

ENCODING
APPARATUS
801

COMPRESSED IMAGE
STREAM
→

IMAGE QUALITY
CONTROL INFORMATION
←

ECU 80

CAMERA
702

→

ENCODING
APPARATUS
802

COMPRESSED IMAGE
STREAM
→

IMAGE QUALITY
CONTROL INFORMATION
←

OBJECT
DETECTION
APPARATUS 10

CONTROL
INFORMATION
↓

CAMERA
703

→

ENCODING
APPARATUS
803

COMPRESSED IMAGE
STREAM
→

IMAGE QUALITY
CONTROL INFORMATION
←

IMAGE QUALITY
CONTROL
APPARATUS
805

CAMERA
704

→

ENCODING
APPARATUS
804

COMPRESSED IMAGE
STREAM
→

IMAGE QUALITY
CONTROL INFORMATION
←

*Fig. 8*

**INTERNATIONAL SEARCH REPORT**

| International application No. |
| --- |
| PCT/JP2015/066038 |

| A. CLASSIFICATION OF SUBJECT MATTER |
| --- |
| *G06T7/20*(2006.01)i, *G06T7/00*(2006.01)i, *G08G1/16*(2006.01)i, *H04N5/232* (2006.01)i, *H04N7/18*(2006.01)i, *H04N19/513*(2014.01)i |

According to International Patent Classification (IPC) or to both national classification and IPC

| B. FIELDS SEARCHED |
| --- |
| Minimum documentation searched (classification system followed by classification symbols) |
| G06T7/20, G06T7/00, G08G1/16, H04N5/232, H04N7/18, H04N19/513 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2001-346224 A (Toshiba Corp.), 14 December 2001 (14.12.2001), entire text; all drawings (Family: none) | 1-12 |
| A | JP 2009-271758 A (Denso Corp.), 19 November 2009 (19.11.2009), entire text; all drawings & US 2009/0279738 A1 | 1-12 |
| A | JP 2008-028528 A (Matsushita Electric Industrial Co., Ltd.), 07 February 2008 (07.02.2008), paragraph [0046] (Family: none) | 9 |

| ☒ Further documents are listed in the continuation of Box C. | ☐ See patent family annex. |
| --- | --- |

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| 26 June 2015 (26.06.15) | 07 July 2015 (07.07.15) |

| Name and mailing address of the ISA/ <br> Japan Patent Office <br> 3-4-3,Kasumigaseki,Chiyoda-ku, <br> Tokyo 100-8915,Japan | Authorized officer |
| --- | --- |
| | Telephone No. |

Form PCT/ISA/210 (second sheet) (July 2009)

**INTERNATIONAL SEARCH REPORT**

| International application No. |
| --- |
| PCT/JP2015/066038 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-131572 A  (Toshiba Corp.),<br>05 June 2008 (05.06.2008),<br>paragraphs [0033] to [0035]<br>(Family: none) | 10 |
| A | JP 2008-181324 A  (Fujifilm Corp.),<br>07 August 2008 (07.08.2008),<br>paragraph [0026]<br>(Family: none) | 11 |
| A | EP 2658255 A1  (SIEMENS AG),<br>30 October 2013 (30.10.2013),<br>entire text; all drawings<br>& WO 2013/160040 A1 | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014152669 A

- JP 2001250118 A